# EUROPEAN PATENT SPECIFICATION

(11) **EP 3 982 800 B1**
(45) Date of publication and mention of the grant of the patent: **29.04.2026**
(21) Application number: 20822218.2
(22) Date of filing: 08.06.2020
(51) Int. Cl.: A47J 43/07, A47J 43/046

(54) **A FOOD PROCESSOR**
LEBENSMITTELVERARBEITUNGSVORRICHTUNG
ROBOT CULINAIRE

(30) Priority: 13.06.2019 CN 201920884368 U; 13.06.2019 CN 201920884379 U
(43) Date of publication of application: 20.04.2022
(73) Proprietor: Zhejiang Shaoxing Supor Domestic Electrical Appliance Co., Ltd., Shaoxing, Zhejiang 312017 (CN)
(72) Inventor: CHEN, Yingjun, Shaoxing, Zhejiang 312017 (CN); TANG, Lumeng, Shaoxing, Zhejiang 312017 (CN)
(74) Representative: LLR
(86) International application number: PCT/CN2020/094928
(87) International publication number: WO 2020/248941

(56) References cited:
- WO-A1-2011/014972
- CN-U- 207 768 225
- CN-U- 208 031 059
- CN-U- 208 031 059
- CN-U- 208 031 059
- CN-U- 208 192 854
- CN-U- 208 192 854
- CN-U- 208 192 949
- CN-U- 208 822 278
- CN-U- 208 822 278
- US-A1- 2018 338 643

## Description

### Field of the Invention

The invention relates to the field of small electrical home appliances, and in particular to a food processor.

### Background of the Invention

In order to improve crushing effect, existing food processors are usually provided with a flow disturbing rib on an inner wall of a bowl. However, the flow disturbing rib provided on the inner wall of the bowl cannot be adjusted. When there is relatively little food material in the bowl, it can achieve the effect of flow disturbing. When there is relatively much food material in the bowl, during the course of operation of a food processor, the level of the liquid formed by mixing and beating the food material may raise relatively high. Flow disturbing cannot be performed at the high level of liquid if flow disturbing ribs are only provided on the inner wall of the bowl. Therefore, to ensure a good effect of flow disturbing for different heights of the level of the liquid, a flow disturbing rib with adjustable position may be provided. CN208031059U discloses a food processor.

### Summary of the Invention

The invention provides a food processor having a good effect of flow disturbing. A food processor according to the present invention is defined in independent claim 1.

According to a first aspect of the invention, a food processor comprises a base and a bowl provided on the base. The bowl is provided with a bowl cover. A crushing assembly and a flow disturbing casing located outside the crushing assembly are provided in the bowl. The flow disturbing casing comprises a body portion and a narrowed portion formed by upwardly extending from the body portion. The narrowed portion is provided with a first thread. The bowl cover is provided with a screw adapted to the narrowed portion so as to adjust the position of the flow disturbing casing in the bowl. By means of the cooperation between the screw and the narrowed portion, a rotation of the screw drives the flow disturbing casing to move up and down along an axial direction of the bowl, so as to adjust the position of a flow disturbing rib, thereby achieving the best effect of flow disturbing on a food material in the bowl.

Further, the screw is provided with a second thread adapted to the first thread. By means of the cooperation between the first thread and the second thread, the reliability of the position adjustment of the flow disturbing casing by the screw is ensured.

Further, the bowl cover is provided with a feed port, and the screw is in clearance fit with the feed port and provided with a blocking portion overlapping the bowl cover. The blocking portion is used to limit the position of the screw. The clearance fit between the screw and the feed port can make it smoother when the screw drives the flow disturbing casing to move and avoid any interference.

Further, an activity space with a height of H1 is formed between the flow disturbing casing and the bowl cover, wherein 20mm < H1 < 60mm. By providing the activity space, the position of the flow disturbing casing can be adjusted within this range so as to achieve the best effect of flow disturbing.

Further, the screw is sleeved by a first seal. When the blocking portion abuts against the bowl cover, the distance between the first seal and the bowl cover is H2, wherein 0.2mm < H2 < 0.5mm. The first seal may prevent the overflow of a food material while having a certain position limiting function for preventing the screw from oscillating up and down during the operation of the bowl.

Further, the body portion is provided with a first flow disturbing rib and a second flow disturbing rib. The first flow disturbing rib is formed by recessing inwardly from the body portion along an axial direction. The first flow disturbing rib and the second flow disturbing rib are provided to enhance the effect of flow disturbing of the flow disturbing casing. With the first flow disturbing rib being formed by recessing inwardly from the body portion along the axial direction, the manufacturing is facilitated and cost is reduced.

Further, the second flow disturbing rib protrudes radially from near an upper end of the first flow disturbing rib towards the inside of the body portion or is obliquely arranged on an inner wall of the body portion. With the second flow disturbing rib either being obliquely provided or protruding into the body portion, the effect of flow disturbing can be enhanced.

Further, a third flow disturbing rib connected to the second flow disturbing rib is provided above the second flow disturbing rib. The third flow disturbing rib is an annular band extending radially from an inner wall of the body portion. A through hole is formed at the center of the annular band. The diameter of the through hole is D1, and the inner diameter of the flow disturbing casing is D2, wherein 20mm < D1 < 100mm and 10mm < D2-D1 < 50mm.

Further, the body portion and an inner wall of the bowl cover are in clearance fit with a clearance of W1, wherein 0.1 mm < W1 < 0.5 mm.

Further, the crushing assembly comprises a cutter plate and a blade shaft assembled with the cutter plate. A blade is provided at a top end of the blade shaft. The cutter plate is provided with a plurality of fourth flow disturbing ribs inclined in the same direction.

It can be seen from the above technical solution that the invention enhances the effect of flow disturbing in the course of slurrying of the food processor by providing a position-adjustable flow disturbing casing in the bowl, so that slurry is more refined and the working efficiency of the food processor can be increased, improving the user experience.

According to a further aspect of the invention, a first vent hole for venting gas is formed in the screw. By providing the first vent hole, air flow during mixing or cooking steam can be vented more smoothly, so that burning injuries due to accumulation of steam is prevented when opening the cover.

Further, the bowl cover is provided with a feed port, the screw is in clearance fit with the feed port and provided with a blocking portion which is provided with supporting ribs overlapping the bowl cover, and a second vent hole is formed between adjacent supporting ribs. The cooperation between the second vent hole and the first vent hole enables better venting.

Further, the screw comprises a grip portion located above the blocking portion and a spiral portion located below the blocking portion and provided with a second thread adapted to the first thread. By providing the blocking portion, the screw is supported and limited in position.

Further, the first vent hole is provided on the grip portion or at a connection part between the spiral portion and the blocking portion, so as to achieve a good effect of venting.

Further, the gap formed between the spiral portion and the feed port is W2, wherein 0.1mm ≤ W2 ≤ 0.3mm, and the height of the supporting ribs is H3, wherein 0.3mm ≤ H3 ≤ 1mm. The clearance fit between the screw and the feed port can make it smoother when the screw drives the flow disturbing casing to move and avoid interference.

Further, the diameter of the first vent hole is D, wherein 2mm ≤ D≤ 5mm.

Further, the first vent hole is a break provided on the first thread and/or the second thread.

It should be understood that the general description above and the detailed description further below are merely illustrative and explanatory, and cannot limit the invention.

### Description of the Drawings

To describe the technical solutions in the embodiments of the invention, the accompanying drawings to be used for describing the embodiments are briefly introduced below. Obviously, the accompanying drawings described below are merely some embodiments of the invention. An ordinary person skilled in the art can obtain other drawings based on those accompanying drawings without involving an inventive step.
Fig. 1 is a schematic view in perspective of an assembled food processor of an embodiment of the invention;
Fig. 2 is a schematic sectional view in perspective of a flow disturbing casing of an embodiment of the invention;
Fig. 3 is a schematic sectional view of a bowl of an embodiment of the invention;
Fig. 4 is a schematic sectional view of the assembly including a bowl, a bowl cover, and a flow disturbing casing of an embodiment of the invention;
Fig. 5 is an enlarged schematic view of a detail of Fig. 4;
Fig. 6 is a schematic sectional view in perspective of a flow disturbing casing of another embodiment of the invention;
Fig. 7 is a schematic sectional view in perspective of a flow disturbing casing of an embodiment of the invention;
Fig. 8 is a schematic sectional view in perspective of a bowl cover of an embodiment of the invention;
Fig. 9 is an exploded schematic view in perspective of a flow disturbing casing and a bowl cover of an embodiment of the invention;
Fig. 10 is a schematic sectional view of the assembly including a bowl, a bowl cover, and a flow disturbing casing of another embodiment of the application;
Fig. 11 is an enlarged schematic view of a detail of Fig. 10;
Fig. 12 is a schematic sectional view of the assembly including a bowl, a bowl cover, and a flow disturbing casing of another embodiment of the invention;
Fig. 13 is a schematic view in perspective of a screw of an embodiment of the invention.

References in the figures:
Food processor 100;
Base 1;
Bowl 2; Supporting portion 20; Upright rib 21; Bowl cover 22; Feed port 220;
Crushing assembly 3; Cutter plate 30; Fourth flow disturbing rib 301; Flange 31; Blade shaft 32; Crushing blade 33; Second seal 34;
Flow disturbing casing 4; Body portion 40; First flow disturbing rib 401; Second flow disturbing rib 402; Third flow disturbing rib 403; Through hole 4031; Narrowed portion 41; Passage hole 410; First thread 411;
Screw 5; Second thread 50; First seal 51; Blocking portion 52; Grip portion 510; Spiral portion 511; First vent hole 53; Supporting rib 54; Second vent hole 55.

### Detailed Description of the Invention

Exemplary embodiments, which are illustrated in the figures, will be described in detail here. In the description below related to the figures, unless otherwise indicated, the same numbers in different figures refer to the same or similar elements. The modes of realization described in the following exemplary embodiments do not represent all modes of realization in accordance with the invention. Instead, they are merely examples of devices and methods in accordance with some aspects of the invention described in detail in the appended claims.

The terms used in the description are merely for the purpose of describing specific embodiments, and not intended to be limiting. Singular forms used in the description and the appended claims of the invention, such as "a", "one" or "the", are also intended to include the plural form, unless the context clearly indicates otherwise. It should also be understood that the term "and/or" used herein means and includes any and all possible combinations of one or more of the associated listed items.

It should be understood that, although the description may use terms such as "first," "second," and "third" to describe various items of information, those items of information are not limited to those terms. Those terms are merely used to distinguish information of the same type. For example, without departing from the scope of the invention, a first item of information can also be referred to as a second item of information. Similarly, a second item of information can also be referred to as a first item of information. Depending on the context, such as terms used therein, "if" can be construed as "when . . ." or "in the event that . . ." or "in response to the determination that . . . ."

A food processor of the invention is described in detail in reference to the figures. As long as the resulting embodiment is encompassed by the appended claims, the characteristics in the embodiments and modes of realization described below can be combined with each other.

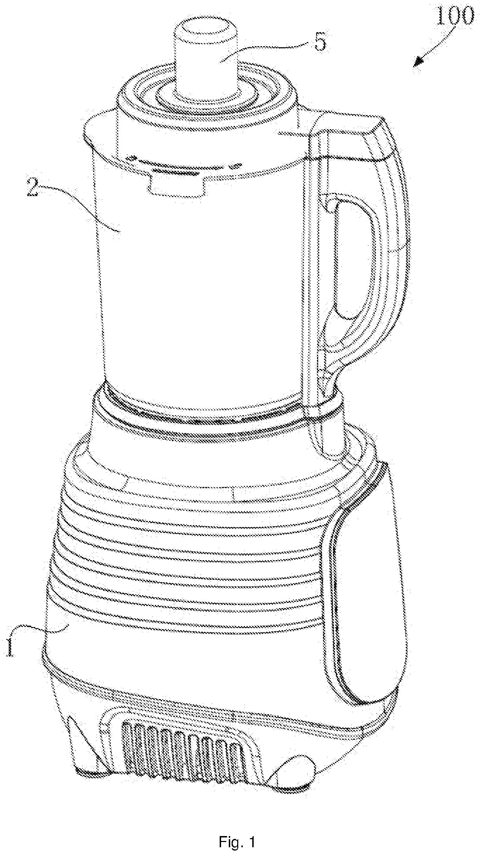

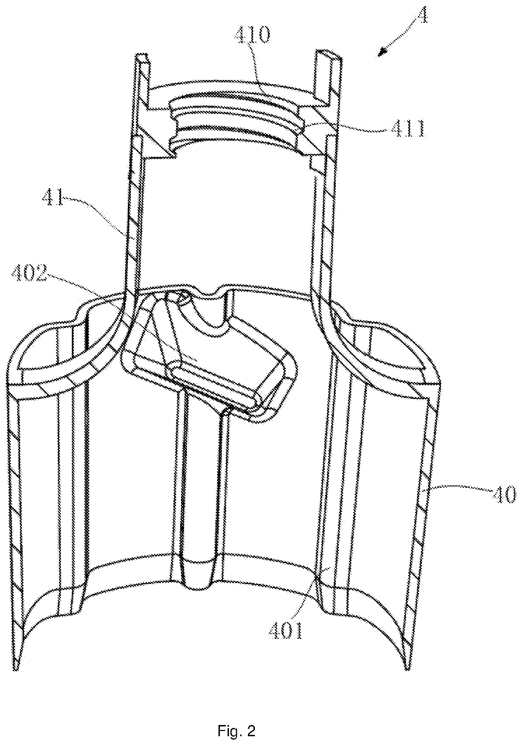

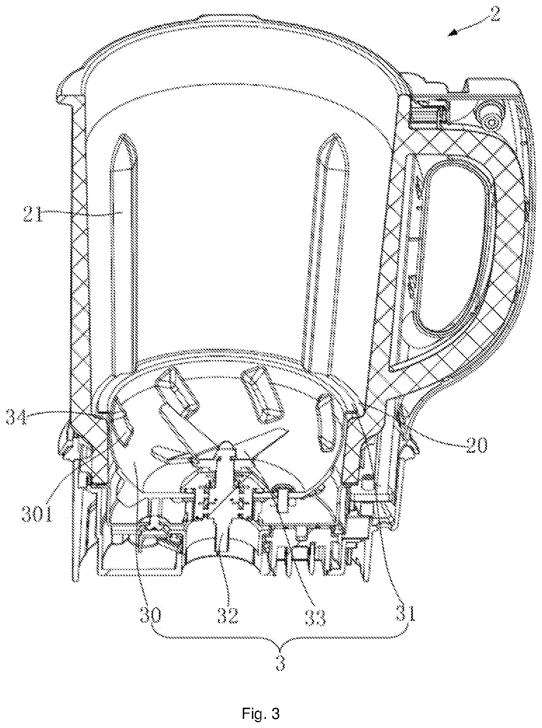

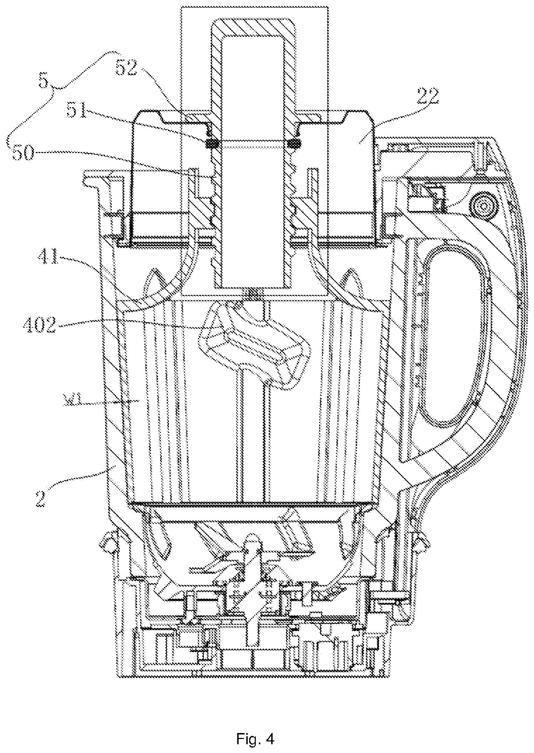

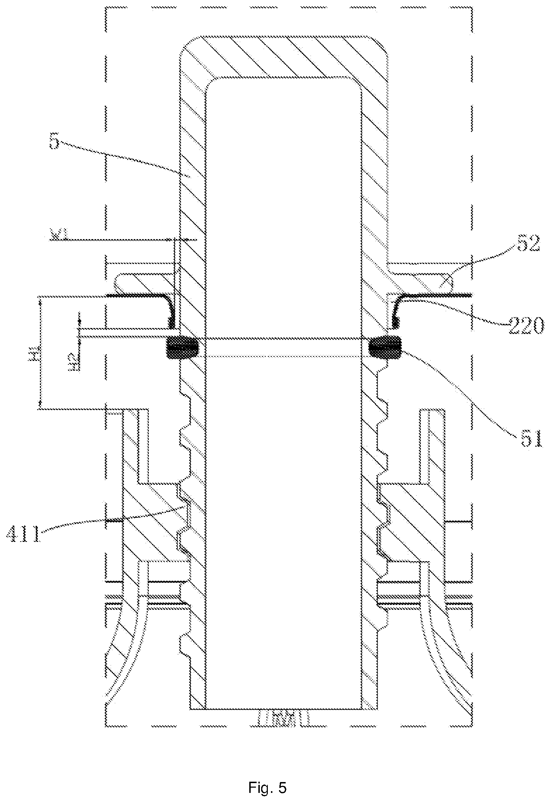

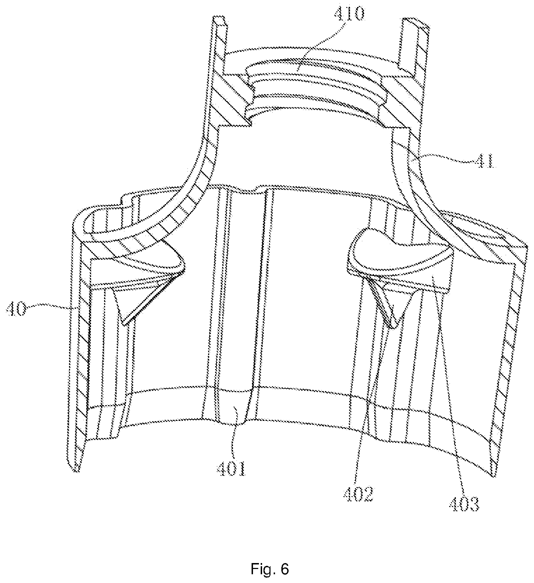

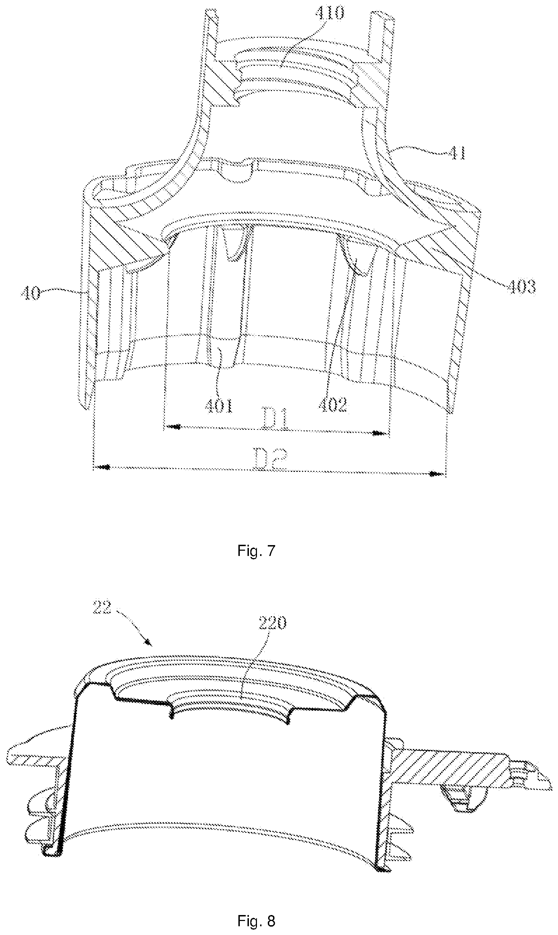

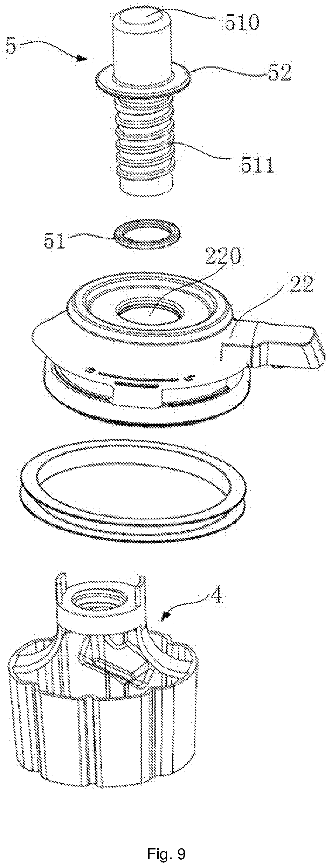

With reference to Fig. 1 to Fig. 9, a food processor 100 of the invention comprises a base 1 and a bowl 2 provided on the base 1. A crushing assembly 3 and a flow disturbing casing 4 positioned outside the crushing assembly 3 are provided in the bowl 2. The flow disturbing casing 4 comprises a body portion 40 and a narrowed portion 41 formed by upwardly extending from the body portion 40. The narrowed portion 41 is provided with a first thread 411. The bowl cover 22 is provided with a screw 5 adapted to the narrowed portion 41 so as to adjust the position of the flow disturbing casing in the bowl 2. At the same time, the narrowed portion 41 facilitates the detachable assembly and disengagement between the flow disturbing casing 4 and the bowl 2, which facilitates the cleaning of the flow disturbing casing 4. In the invention, by means of the cooperation between the screw 5 and the narrowed portion 41, a rotation of the screw drives the flow disturbing casing to move up and down along an axial direction of the bowl 2, so as to adjust the position of a flow disturbing rib, thus achieving the best effect of flow disturbing on a food material in the bowl 2.

Specifically, the bowl cover 22 is provided with a feed port 220 and the narrowed portion 41 is provided with a passage hole 410 facing and corresponding to the feed port 220. The first thread 411 is provided on an inner wall of the passage hole. By providing the passage hole 410, direct feeding via the feed port 220 of the bowl cover 22 can be achieved, which facilitates utilization.

In an embodiment, the screw 5 is provided with a second thread 50 adapted to and matching the first thread 411. The screw 5 is of a cylindrical structure. The second thread 50 is provided on an outer wall face of the screw 5. By means of the cooperation between the first thread 411 and the second thread 50, the reliability of the position adjustment of the flow disturbing casing by the screw 5 is ensured.

The screw 5 is in clearance fit with the feed port 220 and provided with a blocking portion 52 overlapping the bowl cover 22. In the present embodiment, the blocking portion 52 is an annular ring provided horizontally. Of course, the blocking portion 52 can also be a blocking block provided at the same horizontal position so as to achieve the supporting of the screw 5. The application does not specifically limit this structure. By providing the blocking portion 52 to limit the position of the screw 5, the clearance fit between the screw and the feed port can make it smoother when the screw drives the flow disturbing casing to move and avoid interference.

An activity space with a height of H1 is formed between the flow disturbing casing and the bowl cover 22, wherein 20mm < H1 < 60mm. By providing the activity space, the position of the flow disturbing casing can be adjusted within this range so as to achieve the best effect of flow disturbing.

The screw 5 is sleeved by a first seal 51. When the blocking portion 52 abuts against the bowl cover 22, the distance between the first seal 51 and the bowl cover 22 is H2, wherein 0.2mm < H2 < 0.5mm. By providing the first seal 51, the overflow of the food material can be prevented, while having a certain position limiting function to prevent the screw 5 from oscillating up and down during the operation of the bowl 2. When the screw 5 drives the flow disturbing casing to move upwards, the first seal 51 moves upwards together with the screw 5.

Specifically, the crushing assembly 3 comprises a cutter plate 30 and a blade shaft 32 provided at the cutter plate 30. A crushing blade 33 is provided on the blade shaft 32. An inner wall of the bowl 2 is provided with a supporting portion 20. A flange 31 is formed on the cutter plate 30 to overlap the supporting portion 20. The flow disturbing casing 4 provided in the bowl 2 abuts against the supporting portion 20 and is located above the crushing blade 33. By providing the flow disturbing casing 4 in the bowl 2, the effect of flow disturbing during the course of slurrying of the food processor 100 is improved, so that the slurry is more refined and the operating efficiency of the food processor 100 can be increased, improving the user experience. Specifically, an electric motor that drives the crushing assembly 3 to rotate is provided in the base 1. An electric motor shaft of the electric motor is connected with the blade shaft 32 via a coupler. A plurality of upright ribs 21 is provided on the inner wall of the bowl 2 for flow disturbing.

The body portion 40 is provided with a first flow disturbing rib 401 and a second flow disturbing rib 402. The first flow disturbing rib 401 is formed by recessing inwardly from the body portion 40 along the axial direction. The first flow disturbing rib 401 and the second flow disturbing rib 402 are provided to improve the effect of flow disturbing of the flow disturbing casing 4. With the first flow disturbing rib 401 being formed by recessing inwardly from the body portion 40 along the axial direction, its production is facilitated and cost is reduced.

In an embodiment, the second flow disturbing rib 402 is obliquely provided on an inner wall of the body portion 40. In this way, the second flow disturbing rib 402 can better cooperate with the first flow disturbing rib 401 to achieve flow disturbing. The second flow disturbing rib 402 can be continuously or separately provided with the first flow disturbing rib 401.

In another embodiment, the second flow disturbing rib 402 protrudes radially from near the upper end of the first flow disturbing rib 401 towards the inside of the body portion 40. A third flow disturbing rib 403 connected to the second flow disturbing rib 402 is provided above the second flow disturbing rib 402. In the present embodiment, the third flow disturbing rib 403 is perpendicularly connected with the second flow disturbing rib 402, with a cross section that is substantially T-shaped. By providing the third flow disturbing rib 403, the effect of flow disturbing of the flow disturbing casing 4 is further enhanced.

In another embodiment, the third flow disturbing rib 403 is an annular band extending radially from an inner wall of the body portion 40. A through hole 4031 corresponding to the passage hole 410 is formed at the center of the annular band. By providing the third flow disturbing rib 403 as an annular band-shaped structure having a through hole 4031, the flow disturbing area is increased, thereby improving the effect of flow disturbing.

The diameter of the through hole 4031 is D1, and the inner diameter of the flow disturbing casing 4 is D2, wherein 20mm < D1 < 100mm and 10mm < D2-D1 < 50mm.

The body portion 40 and an inner wall of the bowl 2 are in clearance fit with a clearance of W1, wherein 0.1 mm < W1 < 0.5 mm. With the clearance fit between the flow disturbing casing 4 and the bowl 2, water steam created during the operation of the food processor 100 can be smoothly vented through the clearance, thus achieving better flow disturbing.

In the invention, the cutter plate 30 is provided with a plurality of fourth flow disturbing ribs 301 inclined in the same direction. A second seal 34 is provided between the flange 31 and the supporting portion 20. By providing the fourth flow disturbing ribs 301, the probability of contact between the food material and the crushing blade 33 is increased, thereby improving the crushing efficiency. The cutter plate 30 is made of stainless steel. The bowl 2 body is made of glass or stainless-steel. By providing the second seal 34, the food material inside the bowl 2 is effectively prevented from infiltrating into the base 1 through the supporting portion 20 and affecting the normal utilization of the food processor 100.

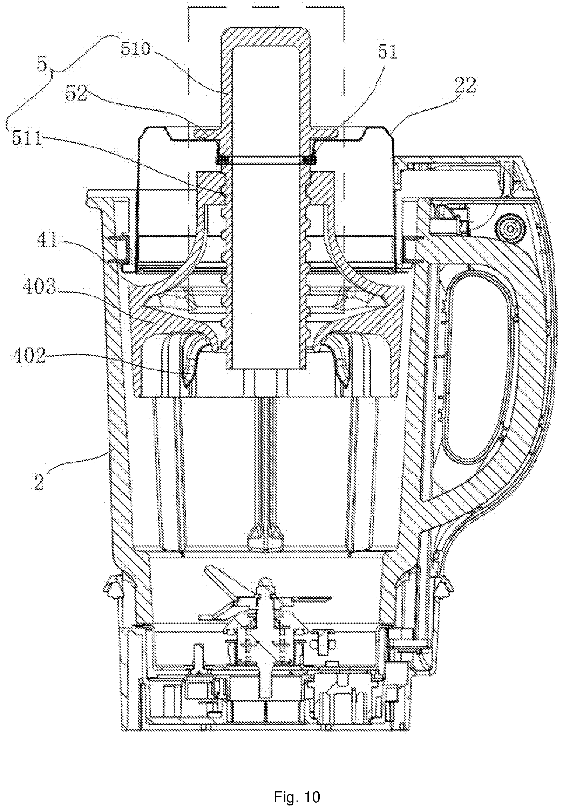

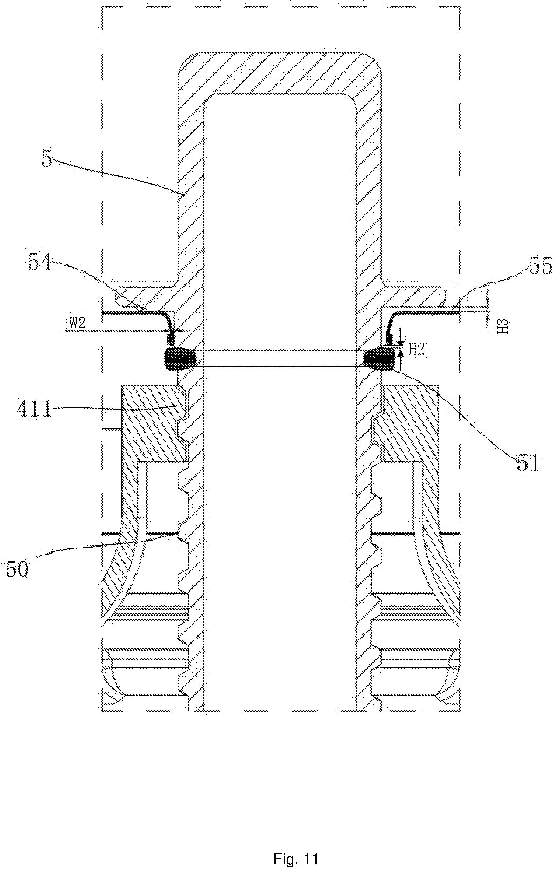

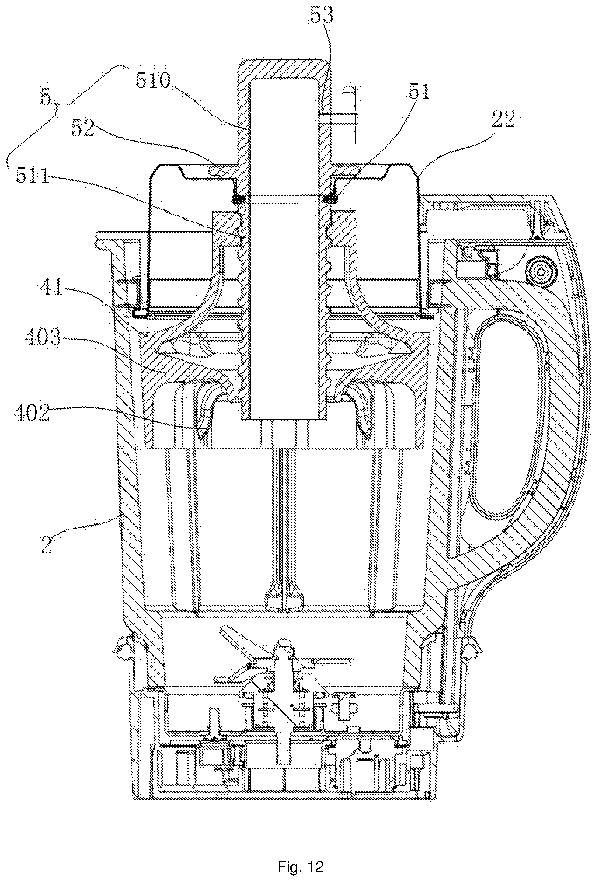

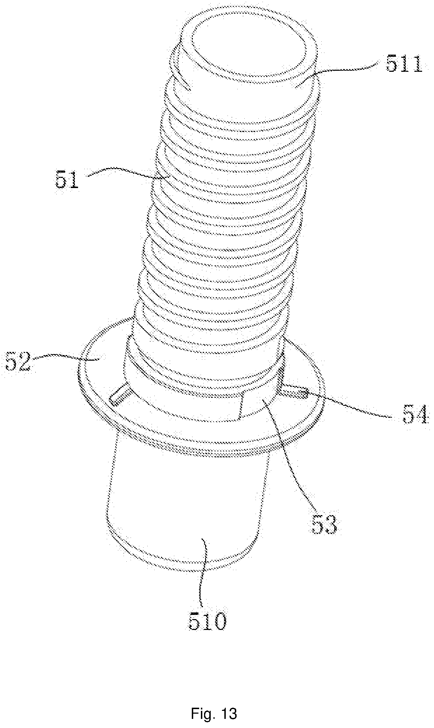

In the embodiments as illustrated in Fig. 10 to Fig. 13, the food processor 100 is similar to the embodiments described above, wherein the screw 5 is further provided with a first vent hole 53 for venting gas. By providing the first vent hole 53, air flow during mixing or cooking steam can be vented more smoothly, so that burning injuries due to accumulation of steam can be avoided when the cover is opened. when the cover is opened.

Specifically, the bowl cover 22 is provided with a feed port 220, and the narrowed portion 41 is provided with a passage hole 410 facing and corresponding to the feed port 220. The first thread 411 is provided on an inner wall of the passage hole. By providing the passage hole 410, direct feeding via the feed port 220 of the bowl cover 22 can be achieved, which facilitates utilization. The screw 5 is in clearance fit with the feed port and provided with a blocking portion 52. The blocking portion 52 is provided with supporting ribs 54 overlapping the bowl cover 22, and a second vent hole 55 is formed between adjacent supporting ribs 54. The cooperation between the second vent hole 55 and the first vent hole 53 enables better venting. In the embodiment, the blocking portion 52 is an annular ring provided horizontally. Of course, the blocking portion 52 can also be a blocking block provided at the same horizontal position so as to achieve the supporting of the screw 5. The application does not specifically limit this structure. By providing the blocking portion 52 to limit the position of the screw 5, the clearance fit between the screw and the feed port can make it smoother when the screw drives the flow disturbing casing to move and avoid interference.

In an embodiment, the screw comprises a grip portion 510 located above the blocking portion 52 and a spiral portion 511 located below the blocking portion. The spiral portion 511 is provided with a second thread 50 adapted to the first thread 411. By providing the blocking portion, the screw is supported and limited in position. The screw 5 is of a cylindrical structure. By means of the cooperation between the first thread 411 and the second thread 50, the reliability of the position adjustment of the flow disturbing casing by the screw 5 is ensured. In an embodiment, the first vent hole 53 is provided at the gripping portion 510; in another embodiment, the first vent hole 53 is provided at a connection part between the spiral portion 511 and the blocking portion so as to achieve a good effect of venting. The diameter of the first vent hole 53 is D, wherein 2mm≤ D≤ 5mm.

The gap formed between the spiral portion 511 and the feed port 220 is W2, wherein 0.1mm ≤ W2 ≤ 0.3mm, and the height of the supporting ribs is H3, wherein 0.3mm ≤ H3 ≤ 1mm. The clearance fit between the screw 5 and the feed port 220 can make it smoother when the screw 5 drives the flow disturbing casing 4 to move and avoid interference.

In another embodiment, the first vent hole 53 is a break provided on the second thread 50. When the blocking portion of the screw abuts against the bowl cover 22, the break is in communication with the inside of the bowl 2 so that gas inside the bowl 2 is effectively vented.

In another embodiment, the first vent hole 53 is a break provided on the first thread 50.

When the screw 5 rotates, the first vent hole 53 is formed at the position of cooperation between the break and the screw, so that the screw 5 is always in communication with the inside of the bowl 2, so as to effectively vent the gas inside the bowl 2.

What have been described above are merely preferred embodiments of the invention, and not for the purpose of limiting the invention.

## Claims

1. A food processor, including a base (1), a bowl (2) provided on the base (1), and a bowl cover (22) provided on the bowl (2), a crushing assembly (3) and a flow disturbing casing (4) positioned outside the crushing assembly (3) are provided in the bowl (2), the flow disturbing casing (4) including a body portion (40) and a narrowed portion (41) formed by upwardly extending from the body portion (40), the narrowed portion (41) being provided with a first thread (411), and the bowl cover (22) being provided with a screw (5) adapted to the narrowed portion (41), **characterized in that** a rotation of the screw (5) driving the flow disturbing casing (4) to move up and down along an axial direction of the bowl, so as to adjust the position of the flow disturbing casing (4) in the bowl (2).

2. The food processor according to claim 1, **characterized in that** the screw (5) is provided with a second thread (50) adapted to the first thread (411).

3. The food processor according to any one of claims 1 to 2, **characterized in that** the bowl cover (22) is provided with a feed port (220), the screw (5) is in clearance fit with the feed port (220) and the screw (5) is provided with a blocking portion (52) overlapping the bowl cover (22).

4. The food processor according to any one of claims 1 to 3, **characterized in that** an activity space with a height of H1 is formed between the flow disturbing casing (4) and the bowl cover (22), wherein 20mm < H1 < 60mm.

5. The food processor according to any one of claims 1 to 4, **characterized in that** the screw (5) is sleeved by a first seal (51), and when the blocking portion (52) is in position against the bowl cover (22), the distance between the first seal (51) and the bowl cover (22) is H2, wherein 0.2mm < H2 < 0.5mm.

6. The food processor according to any one of claims 1 to 5, **characterized in that** the body portion (40) is provided with a first flow disturbing rib (401) and a second flow disturbing rib (402), and the first flow disturbing rib (401) being formed by recessing inwardly from the body portion (40) along the axial direction.

7. The food processor according to claim 6, **characterized in that** the second flow disturbing rib (402) protrudes radially from near the upper end of the first flow disturbing rib (401) towards the inside of the body portion (40) or is obliquely arranged on the inner wall of the body portion (40).

8. The food processor according to claim 7, **characterized in that** a third flow disturbing rib (403) connected to the second flow disturbing rib (402) is provided above the second flow disturbing rib (402), and the third flow disturbing rib (403) is an annular band extending radially from an inner wall of the body portion (40), a through hole (4031) being formed at the center of the annular band, the diameter of the through hole (4031) being D1, and the flow disturbing casing (4) having an inner diameter of D2, wherein 20mm < D1 < 100mm and 10mm < D2-D1 < 50mm.

9. The food processor according to any one of claims 6 to 8, **characterized in that** the body portion (40) and the inner wall of the bowl cover (22) are in clearance fit with a clearance W1 ranging from 0.1 mm to 0.5 mm.

10. The food processor according to any one of claims 1 to 9, **characterized in that** the crushing assembly (3) includes a cutter plate (30) and a blade shaft (32) assembled with the cutter plate (30), a crushing blade (33) being provided at a top end of the blade shaft (32), and a plurality of fourth flow disturbing ribs (301) inclined in the same direction are provided on the cutter plate (30).

11. The food processor according to any one of claims 1 to 10, **characterized in that** a first vent hole (53) for venting gas is formed in the screw (5), with preferably the diameter of the first vent hole (53) being D and 2mm ≤ D ≤ 5mm.

12. The food processor according to claim 11, **characterized in that** the bowl cover (22) is provided with a feed port (220), the screw (5) is in clearance fit with the feed port (220) and a blocking portion (52) is provided on the screw (5), supporting ribs (54) overlapping the bowl cover (22) are provided on the blocking portion (52), and a second vent hole (55) is formed between adjacent supporting ribs (54).

13. The food processor according to claim 12, **characterized in that** the screw (5) includes a grip portion (510) located above the blocking portion (52) and a spiral portion (511) located below the blocking portion (52) and provided with a second thread (50) adapted to the first thread (411), and/or the first vent hole (53) is provided on the grip portion (510) or at the connection part of the spiral portion (511) and the blocking portion (52).

14. The food processor according to claim 13, **characterized in that** the first vent hole (53) is a break provided on the first thread (411) and/or the second thread (50).

15. The food processor according to any one of claims 13 or 14, **characterized in that** the gap formed between the spiral portion (511) and the feed port (220) is W2, wherein 0.1mm ≤ W2 ≤ 0.3mm, and the height of the supporting ribs (54) is H3, wherein 0.3mm ≤ H3 ≤ 1mm.

## Patentansprüche

1. Küchenmaschine, aufweisend einen Sockel (1), eine auf dem Sockel (1) angeordnete Schüssel (2) und einen auf der Schüssel (2) angeordneten Schüsseldeckel (22), wobei in der Schüssel (2) eine Zerkleinerungseinheit (3) und ein außerhalb der Zerkleinerungseinheit (3) angeordnetes Strömungsstörgehäuse (4) vorgesehen sind, wobei das Strömungsstörgehäuse (4) einen Körperabschnitt (40) und einen verengten Abschnitt (41) aufweist, der durch eine nach oben verlaufende Verlängerung des Körperabschnitts (40) gebildet ist, wobei der verengte Abschnitt (41) mit einem ersten Gewinde (411) versehen ist, und der Schüsseldeckel (22) mit einer Schraube (5) versehen ist, die an den verengten Abschnitt (41) angepasst ist, **dadurch gekennzeichnet, dass** eine Drehung der Schraube (5) das Strömungsstörgehäuse (4) zu einer Auf- und Abbewegung antreibt, um die Position des Strömungsstörgehäuses (4) in der Schüssel (2) einzustellen.

2. Küchenmaschine nach Anspruch 1, **dadurch gekennzeichnet, dass** die Schraube (5) mit einem zweiten Gewinde (50) versehen ist, das an das erste Gewinde (411) angepasst ist.

3. Küchenmaschine nach einem der Ansprüche 1 bis 2, **dadurch gekennzeichnet, dass** der Schüsseldeckel (22) mit einer Einfüllöffnung (220) versehen ist, die Schraube (5) mit der Einfüllöffnung (220) in Spielpassung steht und die Schraube (5) mit einem den Schüsseldeckel (22) überlappenden Sperrabschnitt (52) versehen ist.

4. Küchenmaschine nach einem der Ansprüche 1 bis 3, **dadurch gekennzeichnet, dass** zwischen dem Strömungsstörgehäuse (4) und dem Schüsseldeckel (22) ein Arbeitsraum mit einer Höhe von H1 gebildet ist, wobei 20 mm < H1 < 60 mm gilt.

5. Küchenmaschine nach einem der Ansprüche 1 bis 4, **dadurch gekennzeichnet, dass** die Schraube (5) von einer ersten Dichtung (51) ummantelt ist und, wenn sich der Sperrabschnitt (52) in Position gegen den Schüsseldeckel (22) befindet, der Abstand zwischen der ersten Dichtung (51) und dem Schüsseldeckel (22) H2 beträgt, wobei 0,2 mm < H2 < 0,5 mm gilt.

6. Küchenmaschine nach einem der Ansprüche 1 bis 5, **dadurch gekennzeichnet, dass** der Körperabschnitt (40) mit einer ersten Strömungsstörrippe (401) und einer zweiten Strömungsstörrippe (402) versehen ist, wobei die erste Strömungsstörrippe (401) durch eine nach innen gerichtete Vertiefung entlang der axialen Richtung vom Körperabschnitt (40) gebildet ist.

7. Küchenmaschine nach Anspruch 6, **dadurch gekennzeichnet, dass** die zweite Strömungsstörrippe (402) radial von der Nähe des oberen Endes der ersten Strömungsstörrippe (401) in Richtung des Inneren des Körperabschnitts (40) vorsteht oder schräg an der Innenwand des Körperabschnitts (40) angeordnet ist.

8. Küchenmaschine nach Anspruch 7, **dadurch gekennzeichnet, dass** eine mit der zweiten Strömungsstörrippe (402) verbundene dritte Strömungsstörrippe (403) oberhalb der zweiten Strömungsstörrippe (402) vorgesehen ist, und die dritte Strömungsstörrippe (403) ein ringförmiges Band ist, das sich radial von einer Innenwand des Körperabschnitts (40) erstreckt, wobei in der Mitte des ringförmigen Bandes ein Durchgangsloch (4031) ausgebildet ist, der Durchmesser des Durchgangslochs (4031) D1 beträgt und das Strömungsstörgehäuse (4) einen Innendurchmesser von D2 aufweist, wobei 20 mm < D1 < 100 mm und 10 mm < D2 - D1 < 50 mm gilt.

9. Küchenmaschine nach einem der Ansprüche 6 bis 8, **dadurch gekennzeichnet, dass** der Körperabschnitt (40) und die Innenwand des Schüsseldeckels (22) in einer Spielpassung mit einem Spiel W1 im Bereich von 0,1 mm bis 0,5 mm stehen.

10. Küchenmaschine nach einem der Ansprüche 1 bis 9, **dadurch gekennzeichnet, dass** die Zerkleinerungseinheit (3) eine Schneidplatte (30) und eine mit der Schneidplatte (30) verbundene Messerwelle (32) aufweist, wobei an einem oberen Ende der Messerwelle (32) ein Zerkleinerungsmesser (33) vorgesehen ist und an der Schneidplatte (30) mehrere vierte Strömungsstörrippen (301) vorgesehen sind, die in derselben Richtung geneigt sind.

11. Küchenmaschine nach einem der Ansprüche 1 bis 10, **dadurch gekennzeichnet, dass** in der Schraube (5) eine erste Entlüftungsöffnung (53) zum Ablassen von Gas ausgebildet ist, wobei der Durchmesser der ersten Entlüftungsöffnung (53) vorzugsweise D ist und 2 < D < 5 mm gilt.

12. Küchenmaschine nach Anspruch 11, **dadurch gekennzeichnet, dass** der Schüsseldeckel (22) mit einer Einfüllöffnung (220) versehen ist, die Schraube (5) mit der Einfüllöffnung (220) in Spielpassung steht und an der Schraube (5) ein Sperrabschnitt (52) vorgesehen ist, an dem sich Stützrippen (54) befinden, die den Schüsseldeckel (22) überlappen, und zwischen benachbarten Stützrippen (54) eine zweite Entlüftungsöffnung (55) ausgebildet ist.

13. Küchenmaschine nach Anspruch 12, **dadurch gekennzeichnet, dass** die Schraube (5) einen oberhalb des Sperrabschnitts (52) angeordneten Griffabschnitt (510) und einen unterhalb des Sperrabschnitts (52) angeordneten Spiralabschnitt (511) aufweist, der mit einem an das erste Gewinde (411) angepassten zweiten Gewinde (50) versehen ist, und/oder die erste Entlüftungsöffnung (53) am Griffabschnitt (510) oder am Verbindungsabschnitt zwischen dem Spiralabschnitt (511) und dem Sperrabschnitt (52) vorgesehen ist.

14. Küchenmaschine nach Anspruch 13, **dadurch gekennzeichnet, dass** die erste Entlüftungsöffnung (53) eine Unterbrechung ist, die an dem ersten Gewinde (411) und/oder dem zweiten Gewinde (50) vorgesehen ist.

15. Küchenmaschine nach einem der Ansprüche 13 oder 14, **dadurch gekennzeichnet, dass** der zwischen dem Spiralabschnitt (511) und der Einfüllöffnung (220) gebildete Spalt W2 beträgt, wobei 0,1 mm < W2 < 0,3 mm gilt, und die Höhe der Stützrippen (54) H3 beträgt, wobei 0,3 mm < H3 < 1 mm gilt.

## Revendications

1. Un robot culinaire incluant une base (1), un bol (2) prévu sur la base (1) et un couvercle de bol (22) prévu sur le bol (2) ; un ensemble de broyage (3) et un boîtier (4) perturbateur d'écoulement positionné à l'extérieur de l'ensemble de broyage (3) sont prévus dans le bol (2), le boîtier (4) perturbateur d'écoulement incluant une partie formant corps (40) et une partie rétrécie (41) formée en s'étendant vers le haut à partir de la partie formant corps (40), la partie rétrécie (41) étant pourvue d'un premier filetage (411), et le couvercle du bol (22) étant muni d'une vis (5) adaptée à la partie rétrécie (41), **caractérisé en ce qu'**une rotation de la vis (5) fait monter et descendre le boîtier (4) perturbateur d'écoulement selon une direction axiale du bol, de manière à régler la position du boîtier (4) perturbateur d'écoulement dans le bol (2).

2. Le robot culinaire selon la revendication 1, **caractérisé en ce que** la vis (5) est pourvue d'un deuxième filetage (50) adapté au premier filetage (411).

3. Le robot culinaire selon l'une quelconque des revendications 1 à 2, **caractérisé en ce que** le couvercle du bol (22) présente un orifice d'alimentation (220), la vis (5) est en engagement avec jeu avec l'orifice d'alimentation (220) et la vis (5) est munie d'une partie de blocage (52) chevauchant le couvercle du bol (22).

4. Le robot culinaire selon l'une quelconque des revendications 1 à 3, **caractérisé en ce qu'**un espace d'activité d'une hauteur H1 est formé entre le boîtier (4) perturbateur d'écoulement et le couvercle du bol (22), dans lequel 20 mm < H1 < 60 mm.

5. Le robot culinaire selon l'une quelconque des revendications 1 à 4, **caractérisé en ce que** la vis (5) comprend un premier joint d'étanchéité (51) emmanché sur elle, et, lorsque la partie de blocage (52) est en position contre le couvercle du bol (22), la distance entre le premier joint d'étanchéité (51) et le couvercle du bol (22) est H2, dans lequel 0,2 mm < H2 < 0,5 mm.

6. Le robot culinaire selon l'une quelconque des revendications 1 à 5, **caractérisé en ce que** la partie formant corps (40) est pourvue d'une première nervure (401) perturbatrice d'écoulement et d'une deuxième nervure (402) perturbatrice d'écoulement, la première nervure (401) perturbatrice d'écoulement étant formée par un évidement vers l'intérieur à partir de la partie formant corps (40), selon la direction axiale.

7. Le robot culinaire selon la revendication 6, **caractérisé en ce que** la deuxième nervure (402) perturbatrice d'écoulement fait saillie radialement à partir du voisinage de l'extrémité supérieure de la première nervure (401) perturbatrice d'écoulement vers l'intérieur de la partie formant corps (40) ou est agencée obliquement sur la paroi intérieure de la partie formant corps (40).

8. Le robot culinaire selon la revendication 7, **caractérisé en ce qu'**une troisième nervure (403) perturbatrice d'écoulement reliée à la deuxième nervure (402) perturbatrice d'écoulement est prévue au-dessus de la deuxième nervure (402) perturbatrice d'écoulement, et la troisième nervure (403) perturbatrice d'écoulement est une bande annulaire s'étendant radialement à partir d'une paroi intérieure de la partie formant corps (40), un trou traversant (4031) étant formé au centre de la bande annulaire, le diamètre du trou traversant (4031) étant D1, et le boîtier (4) perturbateur d'écoulement ayant un diamètre intérieur qui est D2, dans lequel 20 mm < D1 < 100 mm et 10 mm < D2-D1 < 50 mm.

9. Le robot culinaire selon l'une quelconque des revendications 6 à 8, **caractérisé en ce que** la partie formant corps (40) et la paroi intérieure du couvercle du bol (22) sont en engagement avec jeu, avec un jeu W1 compris entre 0,1 mm et 0,5 mm.

10. Le robot culinaire selon l'une quelconque des revendications 1 à 9, **caractérisé en ce que** l'ensemble de broyage (3) comprend une plaque de coupe (30) et un arbre à lames (32) assemblé avec la plaque de coupe (30), une lame de broyage (33) étant prévue à une extrémité supérieure de l'arbre à lames (32), et une pluralité de quatrièmes nervures (301) perturbatrices d'écoulement inclinées dans la même direction étant prévues sur la plaque de coupe (30).

11. Le robot culinaire selon l'une quelconque des revendications 1 à 10, **caractérisé en ce qu'**un premier trou formant évent (53) pour évacuer du gaz est formé dans la vis (5), le diamètre du premier trou formant évent (53) étant de préférence D et 2 mm < D < 5 mm.

12. Le robot culinaire selon la revendication 11, **caractérisé en ce que** le couvercle du bol (22) présente un orifice d'alimentation (220), la vis (5) est en engagement avec jeu par rapport à l'orifice d'alimentation (220) et une partie de blocage (52) est prévue sur la vis (5), des nervures de support (54) chevauchant le couvercle du bol (22) sont prévues sur la partie de blocage (52), et un deuxième trou formant évent (55) est formé entre des nervures de support (54) adjacentes.

13. Le robot culinaire selon la revendication 12, **caractérisé en ce que** la vis (5) comprend une partie de préhension (510) située au-dessus de la partie de blocage (52) et une partie en spirale (511) située au-dessous de la partie de blocage (52) et pourvue d'un deuxième filetage (50) adapté au premier filetage (411), et/ou le premier trou formant évent (53) est prévu sur la partie de préhension (510) ou au niveau de la partie de connexion de la partie en spirale (511) et de la partie de blocage (52).

14. Le robot culinaire selon la revendication 13, **caractérisé en ce que** le premier trou formant évent (53) est une interruption prévue sur le premier filetage (411) et/ou le deuxième filetage (50).

15. Le robot culinaire selon l'une quelconque des revendications 13 ou 14, **caractérisé en ce que** l'espace formé entre la partie en spirale (511) et l'orifice d'alimentation (220) est W2, dans lequel 0,1 mm ≤ W2 ≤ 0,3 mm, et la hauteur des nervures de support (54) est H3, dans lequel 0,3 mm ≤ H3 ≤ 1 mm.
